# EUROPEAN PATENT APPLICATION

(11) **EP 2 746 111 A1**
(43) Date of publication of application: **25.06.2014**
(21) Application number: 12826317.5
(22) Date of filing: 19.06.2012
(51) Int. Cl.: B60R 19/52, B60K 11/04, B60K 11/08

(54) **GRILLE FOR VEHICLE**

(30) Priority: 20.08.2011 JP 2011194374
(71) Applicant: AMS Co. Ltd, Aichi 454-0053 (JP); National University Corporation Nagoya University, Aichi 464-8601 (JP)
(72) Inventor: TODA Harunobu, Nagoya-shi Aichi 454-0053 (JP); OKAI Kunishige, Nagoya-shi Aichi 454-0053 (JP); WATANABE Yoshihiro, Yatomi-shi Aichi 490-1412 (JP); YOSHIMI Yukiharu, Obu-shi Aichi 474-0002 (JP); IKEDA Tadashige, Nagoya-shi Aichi 464-8601 (JP); FUJII Eiji, Nagoya-shi Aichi 464-8601 (JP)
(74) Representative: Belloni, Giancarlo
(86) International application number: PCT/JP2012/065583
(87) International publication number: WO 2013/027480

(57) **Abstract**

A base panel member 22 is provided with openings 24 that are arranged in a scattered pattern. A back panel member 26 that is arranged on a back surface side of the base panel member 22 has projections 28 that can be inserted into the openings 24 so as to be in close contact therewith. Springs 38 that bias the projections 28 against the openings 24 are disposed in the vicinity of the openings 24 and the projections 28. Shape-memory members 40 are disposed in the vicinity of the springs 38. The projections 28 are inserted into the openings 24 by a biasing force of the springs 38, so that airflow through the openings 24 is prohibited. The shape-memory members 40 change its shape according to temperature changes, and produce a force against the biasing force of the springs 38. This allows the projections 28 to be separated from the openings 24, creating an airflow state in which the air can pass through the openings 24. A design is formed by combining the base panel member 22 and the projections 28, while the projections 28 are inserted into the openings 24.

## Description

### TECHNICAL FIELD

A technique disclosed in this specification relates to vehicle grilles attached to vehicles. More particularly, it relates to a vehicle grille capable of achieving a decorative function that adds to the beauty of the vehicle, and a function of setting an airflow state or an airflow interruption state by a change of ambient temperature.

### BACKGROUND ART

With hybrid vehicles that have become popular in recent years, fuel efficiency is said to deteriorate when overcooling occurs in winter, and as its preventive measure, it is necessary to prevent intrusion of cold air into an engine room. For example, an air conditioning device for an automobile is known as a technique of preventing the intrusion of the cold air into the engine room, in which a communication passage for taking the air into the engine room is opened and closed by a shutter, so as not to reduce the temperature of an outdoor heat exchanger within the engine room in a normal automobile that is equipped with an engine, when outside air temperature is at or lower than a predetermined temperature (Japanese Patent Application Publication No. 2003-170733).

### SUMMARY OF INVENTION

### TECHNICAL PROBLEM

However, with the air conditioning device for the automobile as described in Japanese Patent Application Publication No. 2003-170733, the shutter for opening and closing the communication passage is arranged on a front side of the engine room and inside the vehicle, and therefore, it does not make a contribution to add to the beauty of the vehicle. Exterior parts of the vehicle may be fixed in order to add to the beauty of the vehicle, but when both of the air conditioning device for the automobile as described in Japanese Patent Application Publication No. 2003-170733 and the exterior parts of the vehicle are fixed to the vehicle, the car weight increases accordingly, and the fuel efficiency is deteriorated. Therefore, if such a vehicle grille is realized that adds to the beauty of the vehicle and that has the function of securing the temperature of the engine room when the outside air temperature is the predetermined temperature of lower, its commercial value can be increased.

This specification discloses a vehicle grille capable of achieving a decorative function that adds to the beauty of the vehicle, and a function of setting an airflow state or an airflow interruption state according to ambient temperature.

### SOLUTION TO PROBLEM

A vehicle grille as disclosed in this specification is attached to a vehicle, and is provided with a base panel member, a back panel member, a connecting member, and a moving mechanism. The base panel member is arranged on a front surface side of the vehicle, and is provided with an opening disposed to form a part of a design on the surface of the vehicle. The back panel member is arranged on a back surface side of the base panel member, and has a projection configured to be inserted into the opening of the base panel member so as to be in close contact with the opening. The connecting member connects the back panel member and the base panel member. The moving mechanism is configured to allow the back panel member to move relative to the base panel member, to a first position at which the projection is inserted into the opening, and to a second position at which the projection is separated from the opening. Here, the moving mechanism is provided with a biasing member that biases the back panel member, and a shape-memory member that produces a force against a biasing force of the biasing member by changing its shape according to ambient temperature. The connecting member is provided at a portion where a peripheral portion of the opening of the base panel member overlaps a peripheral portion of the projection of the back panel member. The biasing member and the shape-memory member are attached to the connecting member, and are configured to allow the back panel member to move from the first position to the second position, or to allow the back panel member to move from the second position to the first position, against the biasing force of the biasing member, by the shape-memory member changing its shape according to a change in the ambient temperature. In a state where the back panel member is moved to the first position relative to the base panel member, the design on the surface of the vehicle is integrally formed by the combination of the base panel member and the projection of the back panel member.

With this vehicle grille, it is possible to form a three-dimensional design, to improve a decorative function that adds to the beauty of the vehicle, and to inspire user's motivations for purchase, by combining the base panel member with the projection of the back panel member that is inserted into the opening of the base panel member. Further, when the design of the base panel member is diversified or the shape or the like of the projection is diversified, the design of the vehicle grille formed by the combination of the base panel member and the projection is diversified greatly, so that the beauty of the vehicle increases its variation, and the user's motivations for purchase can be inspired further. Furthermore, as the biasing member and the shape-memory member, constituting the moving mechanism, are attached to the connecting member that is provided at the portion where the peripheral portion of the opening of the base panel member overlaps the peripheral portion of the projection of the back panel member, it is possible to downsize the moving mechanism. As a result of this, the entire vehicle grille can be made smaller, and the vehicle grille occupies less space in the vehicle. Further, the moving mechanism using the shape-memory member produces the force against the biasing force of the biasing member by the shape-memory member changing its shape according to the change in the ambient temperature, so as to switch between the state in which the projection is inserted into the opening and the state in which the projection is not inserted into the opening. Thereby, an airflow state (the state where the airflow is permitted) and an airflow interruption state (the state where the airflow is prohibited) can he switched to each other, according to the ambient temperature. Therefore, the above-described vehicle grille provides greater functionality, and increases its commercial value.

Notably, the biasing force of the biasing member may be set based on wind pressure applied to the base panel member or the back panel member when driving the vehicle. When the biasing force of the biasing member is set based on the wind pressure applied to the base panel member or the back panel member when driving the vehicle, the airflow state or the airflow interruption state can be set according to the strength of the wind pressure, which provides the further greater functionality to the vehicle grille.

In addition, the moving mechanism may further include first holding means for holding the back panel member at the first position, or may further include second holding means for holding the back panel member at the second position. With the structure like this, it is possible to hold the vehicle grille stably in the airflow state or in the airflow interruption state.

Notably, this specification discloses a novel airflow interruption device that allows switching between the airflow state and the airflow interruption state according to the ambient temperature. Namely, the airflow interruption device disclosed in this specification is provided with a base panel member that is provided with an opening, a back panel member that is arranged on a back surface side of the base panel member, and has a projection configured to be inserted into the opening of the base panel member so as to be in close contact with the opening, a connecting member for connecting the back panel member and the base panel member, and a moving mechanism that is configured to allow the back panel member to move relative to the base panel member, to a first position at which the projection is inserted into the opening and to a second position at which the projection is separated from the opening. The moving mechanism is provided with a biasing member that biases the back panel member, and a shape-memory member that produces a force against a biasing force of the biasing member by changing its shape according to the ambient temperature. The connecting member is provided at a portion where a peripheral portion of the opening of the base panel member overlaps a peripheral portion of the projection of the back panel member. The biasing member and the shape-memory member are attached to the connecting member, and are configured to allow the back panel member to move from the first position to the second position, or to allow the back panel member to move from the second position to the first position, against the biasing force of the biasing member, by the shape-memory member changing its shape according to a change in the ambient temperature. This device can be preferably used as the vehicle grille (vehicle component) and the like, and as components other than the vehicle grille.

### BRIEF DESCRIPTION OF DRAWINGS

Fig. 1 is a schematic view of a vehicle according to this embodiment;
Fig. 2 is an enlarged front view of a front grille according to this embodiment;
Fig. 3 is a side view that enlarges and illustrates the front grille according to this embodiment;
Fig. 4 includes views illustrating the front grille, where Fig. 4A illustrates a state where a back panel member is separated from a base panel member, and Fig. 4B illustrates a state where the base panel member and the back panel member are in close contact with each other and projections are inserted into openings;
Fig. 5 includes views illustrating a vehicle front, where Fig. 5A illustrates a state where the front grille is attached, and Fig. 5B illustrates a state where the front grille is not attached;
Fig. 6 includes partially enlarged views of the front grille according to this embodiment, where Fig. 6A illustrates a state where the projection is inserted into the opening, and Fig. 6B illustrates a state where the projection is separated from the opening;
Fig. 7 includes views illustrating an air flow through the front grille according to this embodiment, where Fig. 7A illustrates an airflow state, and Fig. 7B illustrates an airflow interruption state;
Fig. 8 includes front views that enlarge and illustrate front grilles according to other embodiments, where Fig. 8A illustrates a first modification example, Fig. 8B illustrates a second modification example, and Fig. 8C illustrates a third modification example;
Fig. 9 is a view illustrating another embodiment (corresponding to Fig. 6);
Fig. 10 is a view illustrating another embodiment (corresponding to Fig. 6); and
Fig. 11 is a view illustrating another embodiment (corresponding to Fig. 6).

### DESCRIPTION OF EMBODIMENTS

### First embodiment

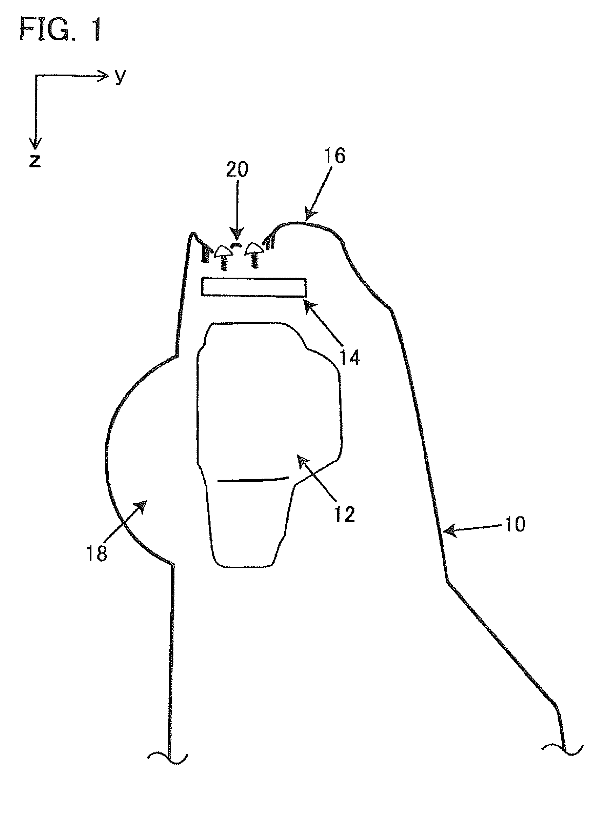

Hereinafter, a vehicle grille according to this embodiment will be explained. In Fig. 1, a front grille for a vehicle 20 (hereinafter simply referred to as a vehicle grille 20) is attached to a front 16 of a vehicle 10. An engine room 12 is provided at the front center of the vehicle 10, and a communication passage 14 is provided on the front (vehicle grille 20) side of the engine room 12. Notably, a reference number 18 denotes a wheel. Automobiles as the vehicles, to which the vehicle grille 20 is attached, may include a hybrid vehicle and a general automobile that is not equipped with traction motor, for example, but the present invention may be applied to other vehicles.

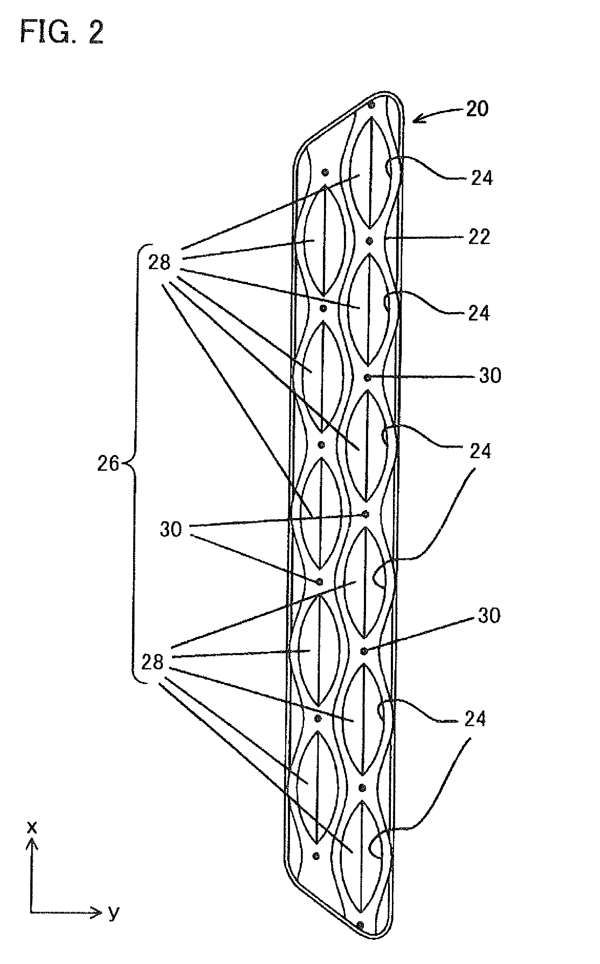

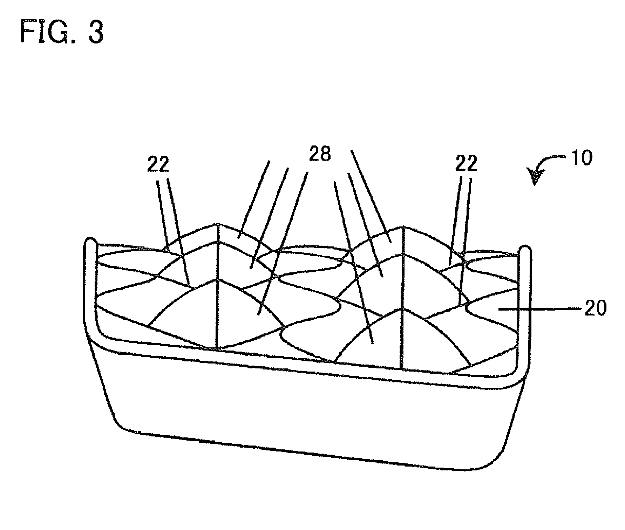

As illustrated in Fig. 2 and Fig. 3, the vehicle grille 20 is provided with a base panel member 22 that is arranged on a front surface side of the vehicle front 16. The base panel member 22 is exposed on the front surface side that is visible from outside the vehicle 10, and includes a plurality of openings 24 that is arranged in a scattered pattern, so as to constitute a part of a design (pattern, decoration and the like) on the surface of the vehicle. In addition, the vehicle grille 20 is provided with a back panel member 26 that is arranged on the back surface side of the base panel member 22. The back panel member 26 includes a plurality of projections 28 that can be fittingly inserted into (in close contact with) the openings 24 of the base panel member 22.

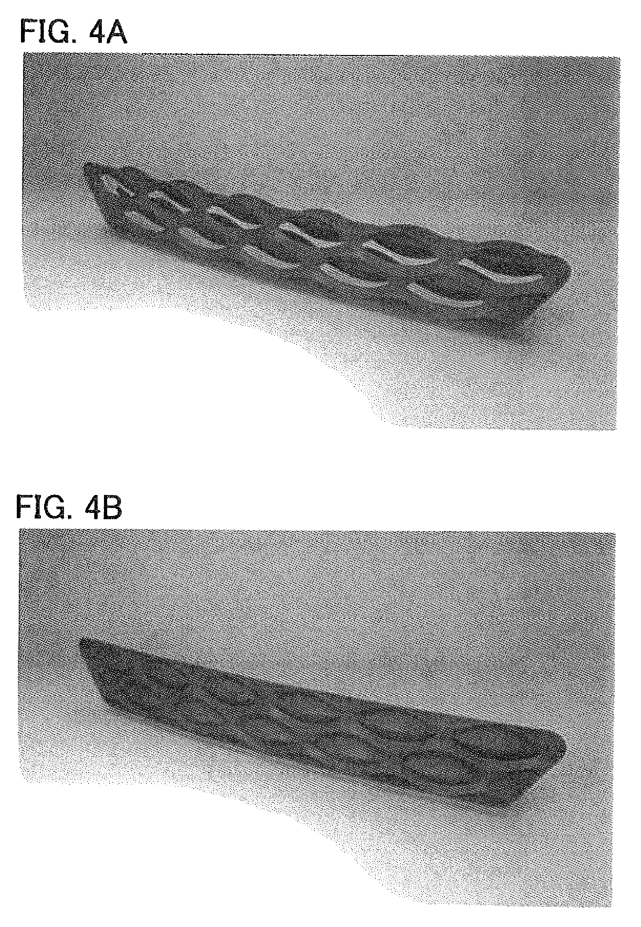

Fig. 4 includes perspective views of the vehicle grille 20, where Fig. 4A illustrates a state where the back panel member 26 is separated from the base panel member 22, and Fig. 4B illustrates a state where the projections 28 arc inserted into the openings 24. As illustrated in Fig. 2 and Fig. 4, two opening groups (24, ..., 24) that are arranged in a longitudinal direction (x-axis direction) with a space therebetween are formed in the base panel member 22. One opening group (24, ..., 24) is formed by the five openings 24 (the left side in Fig. 2 (the lower side in Fig. 4)), and the other opening group (24, ..., 24) is formed by the six openings 24 (the right side in Fig. 2 (the upper side in Fig. 4)). The openings 24 of one of the opening groups (24, ..., 24) are arranged so that these positions in the x-axis direction alternate with the openings 24 of the other opening group (24, ..., 24). Namely, the opening 24 in one opening group (24, ..., 24) are arranged between the neighboring openings 24 in the other opening group (24, ..., 24).

The back panel member 26 is formed by a lower holding plate that corresponds to the lower opening group (24, ..., 24) of the base panel member 22 and an upper holding plate that corresponds to the upper opening group (24, ..., 24) of the base panel member 22 (refer to Fig. 4A). The lower holding plate holds the five projections 28 that line up in the longitudinal direction. The upper holding plate holds the six projections 28 that line up in the longitudinal direction. Thus, when the lower holding plate and the upper holding plate are adhered tightly to the back surface of the base panel member 22, the projections 28 are inserted into the openings 24, and peripheries of the openings 24 fit (are in close contact with) peripheries of the projections 28.

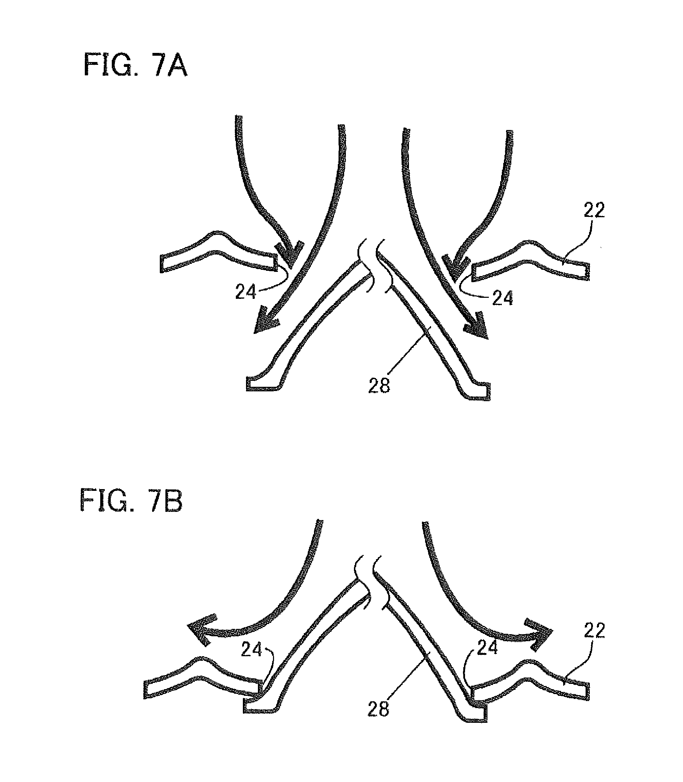

It should be noted that, as illustrated in Fig. 2, each of the openings 24 has a substantially oval shape whose both edges in the x-axis direction (longitudinal direction) have acute angles. As illustrated in Fig. 2 and Fig. 3, each of the projections 28 has a ridgeline extending in the x-axis direction (longitudinal direction), has a substantially oval shape whose both edges in the x-axis direction (longitudinal direction) have acute angles in planar view, and has a protruding shape projecting toward the front of the vehicle. The projection 28 has such a shape as to allow air from the front to flow smoothly along the ridgeline and its outer shape to the surroundings (refer to Fig. 7B). Namely, when the projections 28 are inserted into the openings 24, the air from the front is interrupted by the base panel member 22 and the projections 28, and an air flow that passes through the openings 24 to the inside of the engine room 12 is interrupted (refer to Fig. 7B). Meanwhile, when the projections 28 are separated from the openings 24, an airflow state is created in which the air passes through the openings 24 and flows into the engine room 12 (refer to Fig. 7A).

As described above, the openings 24 arranged in the scattered pattern in the base panel member 22 and a streamlined shape in the vicinity of the openings 24 (refer to Fig. 3 and Fig. 4A) have a novel design, and form a three-dimensional novel design (pattern and decoration), together with the shape of the projections 28 projecting in the direction orthogonal to the base panel member 22. By combining the base panel member 22 and the projections 28 like this, it is possible to form a geometrical design

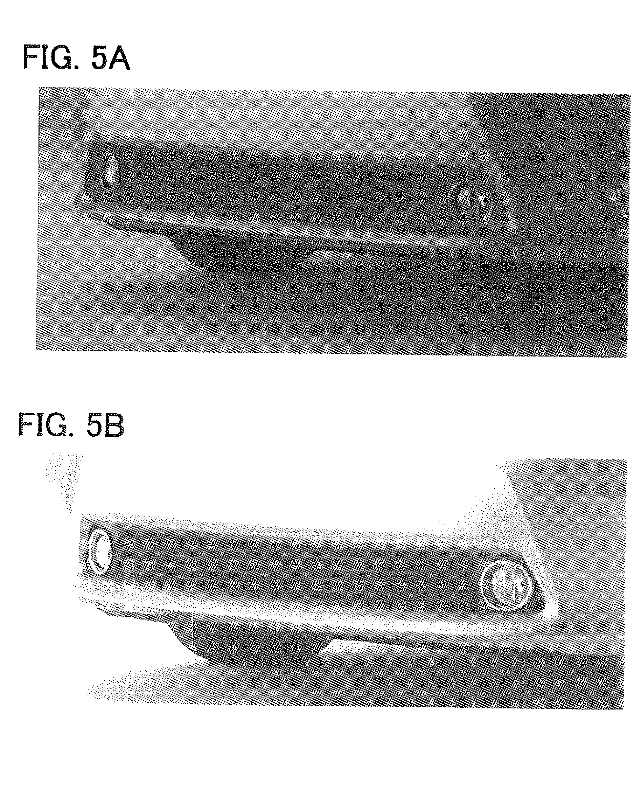

(pattern and decoration) at the front 16 of the vehicle 10. Comparison between states after the front grille 20 is attached as illustrated in Fig. 5A and before it is attached as illustrated in Fig. 5B clarifies a difference in beauty (an effect of the vehicle grille 20) added to the front 16 as illustrated in Fig. 5A.

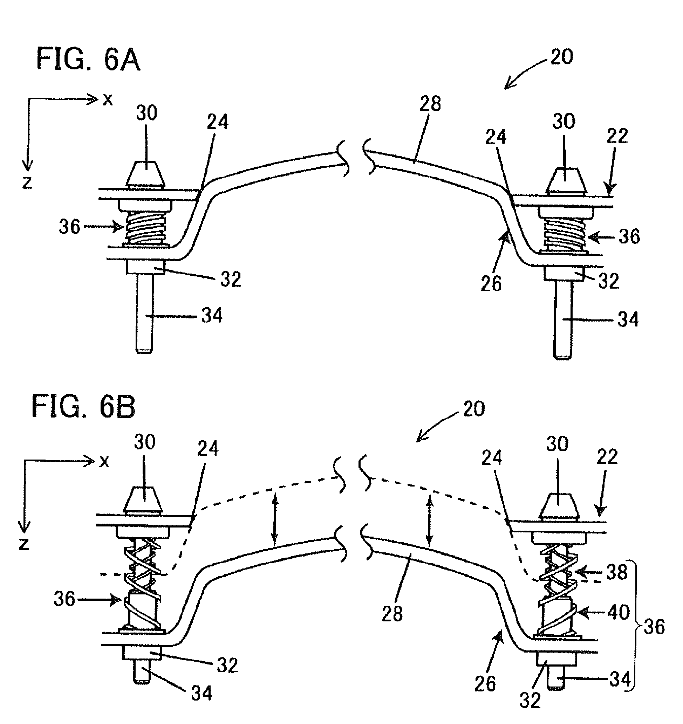

Next, a moving device 36 that allows the back panel member 26 to make relative movement relative to the base panel member 22 will be explained with reference to Fig. 6. The moving device 36 allows movement to a first position (forward movement) at which the projections 28 are inserted into the openings 24, and allows movement to a second position (backward movement) at which the projections 28 in the insertion state are separated from the openings 24. Here, Fig. 6A illustrates the state where each of the projections 28 is inserted into each of the openings 24 (insertion state), and Fig. 6B illustrates the state where each of the projections 28 is separated from each of the openings 24 (separation state).

As illustrated in Figs. 6A and 6B, a peripheral portion of each of the openings 24 of the base panel member 22 overlaps a peripheral portion of each of the projections 28 of the back panel member 26. At the portion where the peripheral portion of the opening 24 and the peripheral portion of the projection 28 overlap one another, a pair (right and left) of connecting shafts 34 (functioning as connecting members and simply referred to as shafts below) is attached. Each of the shafts 34 penetrates through the base panel member 22 and the back panel member 26. A spring 38 as a biasing member is attached around the shaft 34, and the spring 38 biases the projection 28 against the opening 24. Namely, one end of the spring 38 in an extended state is fixed to the peripheral portion of the opening 24, and the other end is fixed to the peripheral portion of the projection 28. Thereby, the peripheral portion of the opening 24 and the peripheral portion of the projection 28 are connected so as to be attracted to each other.

In addition, a shape-memory member 40 for adding a force against a biasing force (tensile force) of the spring 38 is attached to the outer periphery of the spring 38. According to this embodiment, the shape-memory member 40 is formed by a shape-memory alloy whose shape can be changed by a change in ambient temperature. At the time of attaching the spring 38 and the shape-memory member 40 to the shaft 34, the spring 38 is first attached to the outer periphery of the shaft 34, and then the shape-memory member 40 is attached to the outer periphery of the spring 38. Next, the shaft 34 is allowed to penetrate through the base panel member 22 and the back panel member 26 so that the spring 38 and the shape-memory member 40 lie between the base panel member 22 and the back panel member 26, and lastly, both ends of the shaft 34 are secured to the base panel member 22 and the back panel member 26 by fixtures 30 and 32 (by nuts and the like, for example).

When the shape of the shape-memory member 40 changes and extends by the rise of the ambient temperature (the ambient temperature rises to be 5°C or higher, for example), under the insertion state in which the projection 28 is inserted into the opening 24, the shape-memory member 40 produces the force against the tensile force of the spring 38. Thereby, the back panel member 26 moves (makes the backward movement) so that the projection 28 is separated from the opening 24. On the contrary, when the shape-memory member 40 returns back to its original shape by a fall of the ambient temperature (the ambient temperature falls to be 25°C or lower, for example), the force produced by the shape-memory member 40 is smaller than the tensile force of the spring 38. Thereby, the back panel member 26 moves (makes the forward movement) so that the projection 28 is inserted into the opening 24, creating the state where the projection 28 is fully inserted into the opening 24. As a result of this, the opening 24 is closed by the projection 28, and an air inflow and an air outflow between the engine room 12 and the outside of the vehicle 10 are prohibited. Therefore, the airflow state in which the projection 28 releases the opening 24 and an airflow interruption state in which the projection 28 closes the opening 24 are switched therebetween, when the shape-memory member 40 changes its shape according to the ambient temperature, against the tensile force of the spring 38. Here, a mold model formed by the base panel member 22 and the back panel member 26 (refer to Fig. 4), the shafts (connecting members) 34 and the moving mechanism 36 (refer to Fig. 6) constitute an airflow interruption device that switches the airflow state and the airflow interruption state.

Notably, a climate (environmental temperature) may change depending on an area where the vehicle grille 20 is used, and therefore, it is preferable to adjust a transformation point (set temperature characteristic) of the shape-memory member 40 used in the vehicle grille 20 for each of the areas with the different climates.

With the above-described moving mechanism 36, a right and left pair of the springs 38 is disposed at the peripheral portion of the opening 24 and the projection 28, and a right and left pair of the shape-memory members 40 that produce the force against the tensile force of the springs 38 is disposed in the vicinity of the springs 38. Because the movement of the back panel member 26 is made by the shape-memory members 40, the moving mechanism 36 can be greatly downsized as compared with a moving mechanism employing, for example, a drive motor or the like. Notably, it is not necessarily required for the moving mechanism 36 to employ the above-described structure, and various changes can be made. For example, a biasing member, other than the spring, may be employed as the biasing member to bias the back panel member 26, and an electromagnet, for example, may be used to bias the back panel member 26. When the electromagnet is employed as the biasing member, such structure may be employed that enables control of the operation by the electromagnet according to environmental factors of the surroundings (engine speed, accelerator opening, detection by a hot water temperature sensor and a water temperature sensor, and the like, for example) and to adjust the biasing force as appropriate. Further, the number of the springs 38 and the shape-memory members 40 that are fixed to the periphery of the opening 24 and the projection 28 may be three or more, and the springs 38 and the shape-memory members 40 may be attached to shafts that are different from the shafts 34 connecting the base panel member 22 and the back panel member 26. Furthermore, the method of attaching the springs 38 and the shape-memory members 40 is not limited to the above-described method, and may be changed to other methods.

With the moving mechanism using the shape-memory member 40, the shape of the shape-memory member 40 changes by the temperature increase, and the force against the tensile force of the spring 38 is produced, whereby a switch between the airflow state and the airflow interruption state is allowed according to the change in the ambient temperature. Therefore, when the ambient temperature decreases, the vehicle grille 20 is brought into the airflow interruption state, and entry of the air (cold air) through the communication passage 14 into the engine room 12 can be prevented. As a result of this, it is possible for the vehicle grille 20 to prevent intrusion of the cold air into the engine room 12 and to prevent the temperature decrease in the engine room 12, when overcooling occurs in winter. For this reason, when the vehicle grille 20 is attached to the hybrid vehicle, it is possible to prevent deterioration of fuel efficiency in the hybrid vehicle. When the ambient temperature increases, on the other hand, the projection 28 is separated from the opening 24 (separation state), and an excessive temperature increase in the engine room 12 can be prevented as the air from outside the vehicle 10 can flow through the opening 24 of the vehicle grille 20 into the engine room 12 (refer to Fig. 7A).

Notably, an effect of temperature increase protection of the vehicle grille 20 can be evaluated by checking volume of the air passing through the opening 24 and the temperature change in the engine room 12, in the state where the projection 28 is separated from the opening 24 (separation state). Namely, the volume of the air passing through the opening 24 is decided by an opening ratio of the opening 24. The opening ratio of the opening 24 is decided by the position of the projection 28 relative to the opening 24. Therefore, the effect of temperature increase protection of the vehicle grille 20 can be evaluated by detecting the temperature change in the engine room 12 at the specified environmental temperature (at 25°C or 35°C, for example), while changing the opening ratio of the opening 24 (while changing the position of the projection 28 relative to the opening 24). Then, the opening ratio of the opening 24 is set appropriately based on the evaluation results, so as to prevent the temperature increase in the engine room 12 appropriately.

It should be noted that the tensile force (biasing force) of the spring 38 (an example of the biasing member) used in the moving mechanism 36 can be set based on wind pressure applied to the back panel member 26 when driving the vehicle. Specifically, driving speed of the vehicle 10 is set as 80 km/h, for example, the wind pressure applied to the projection 28 is calculated from a surface area of the projection 28 (an area of the opening 24), and the tensile force (biasing force) for pressing the projection 28 against the opening 24 is set so as to withstand the wind pressure. Therefore, when the driving speed of the vehicle 10 does not exceed the predetermined driving speed, the projection 28 closes the opening 24 so as to prevent the intrusion of the outside air into the engine room 12. On the other hand, when the vehicle 10 is driving at the driving speed faster than the predetermined driving speed, and when the wind pressure applied to the projection 28 exceeds the tensile force of the spring 38, the projection 28 is separated from the opening 24 (separation state), creating the airflow state in which the outside air flows through the opening 24 into the engine room 12.

When the tensile force (biasing force) of the spring 38 (an example of the biasing member) is set based on the wind pressure that is applied when driving the vehicle, and the airflow state or the airflow interruption state of the vehicle grille 20 is set, the vehicle grille 20 is switched to the airflow state when the vehicle 10 drives at the speed faster than the predetermined driving speed. Thereby, the outside air of the vehicle 10 flows through the vehicle grille 20 and the communication passage 14 into the engine room 12, and it is possible to prevent the excessive temperature increase in the engine room 12 when driving the vehicle at the speed faster than the predetermined speed.

With the vehicle grille 20 according to the above-described embodiment, it is possible to improve decorativeness by adding to the beauty of the vehicle front 16, and to inspire user's motivations for purchase. Further, the vehicle grille 20 prevents the intrusion of the cold air into the engine room 12 when the temperature is low in winter, so as to secure heat insulation in the engine room 12, to prevent the deterioration of the fuel efficiency in winter, and to realize energy conservation and low fuel consumption. Furthermore, at the time of driving the vehicle at the speed faster than the predetermined speed and when the ambient temperature is high, the air flow into the engine room 12 is permitted so as to prevent overheating of the engine room 12.

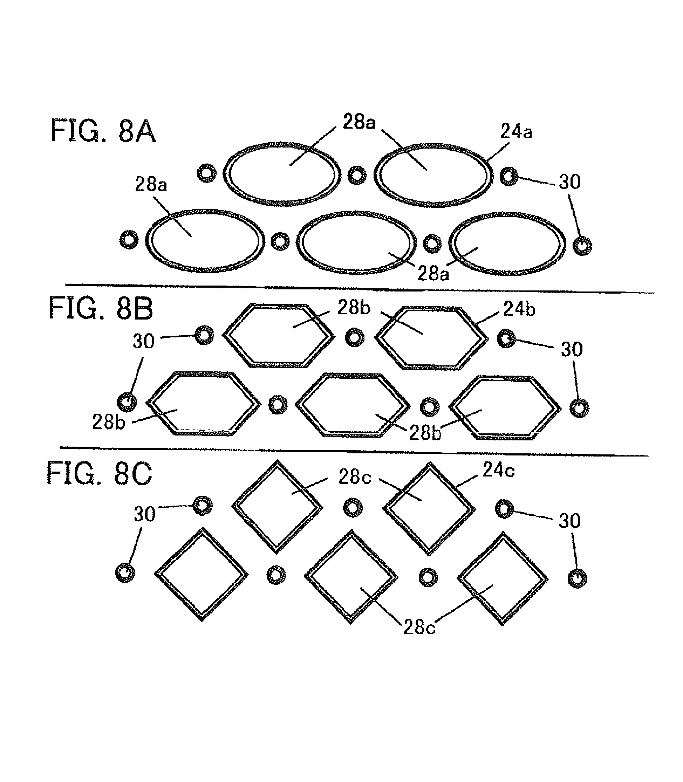

Notably, the technique disclosed in the specification is not limited to the above-described embodiment, and various changes can be made. For example, the base panel member 22 and the back panel member 26 may have the shape and the size that are different from those described above. Especially, the shape and the arrangement of the openings 24 of the base panel member 22 and the shape and the arrangement of the projections 28 of the back panel member 26 are not necessarily limited to those illustrated in Fig. 2, and may be changed to the shape and the arrangement as illustrated in Figs. 8A to 8C. Specifically, each of openings 24a and each of protrusions 28a may have a rounded oval shape (refer to Fig. 8A), each of openings 24b and each of protrusions 28b may have a diamond shape (refer to Fig. 8B), and each of openings 24c and each of protrusions 28c may have a rectangular (quadrangular) shape (refer to Fig. 8C). By combining the base panel member 22 and the projections 28a, 28b and 28c like this, it is possible to add a novel design (pattern or figure) to the vehicle grille 20. In addition, as the design of the vehicle front grille can be changed quite easily by changing the combination of the base panel member 22 and the projections 28, the beauty of the vehicle front becomes more diversified, and the user's motivations for purchase can be inspired.

Further, the moving mechanism 36 for moving the projection 28 of the back panel member 26 may not be necessarily provided to each of all the openings 24 of the base panel member 22, and the moving mechanism 36 for moving the projection 28 may be provided to the specified (a part of the) openings 24, so as to set the airflow state and the airflow interruption state.

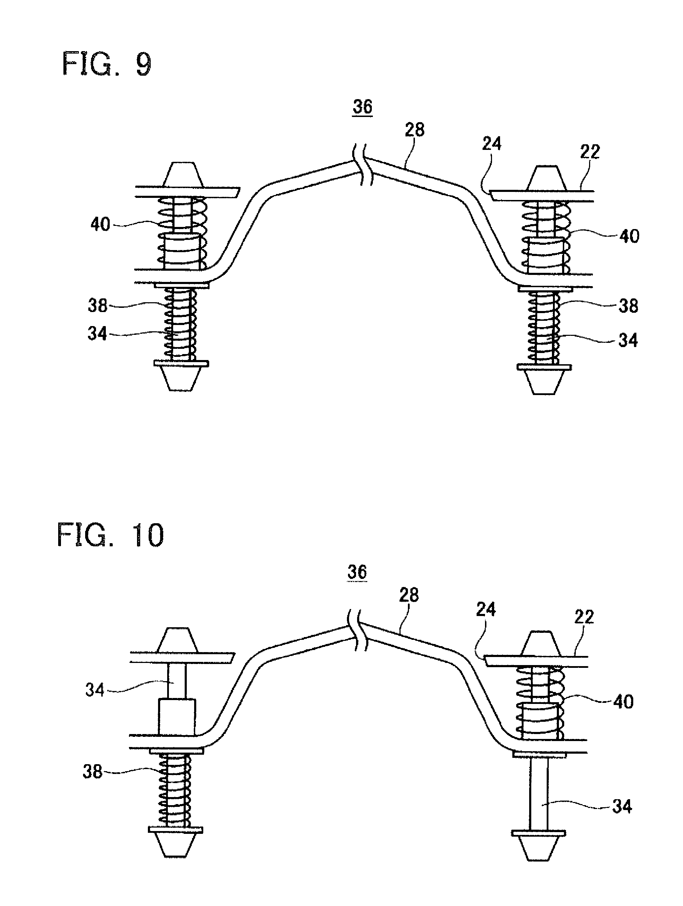

Moreover, the moving mechanism 36 may have the following structure. Namely, the peripheral portion of the opening 24 of the base panel member 22, as illustrated in Figs. 9 and 10, overlaps the peripheral portion of the projection 28 of the back panel member 26, and at the overlapping portion, the shaft members 34 are attached to penetrate through the base panel member 22 and the back panel member 26. As illustrated in Fig. 9, the spring 38 and the shape-memory member 40 are attached to each of the shaft members 34. The shape-memory member 40 is formed by the shape-memory alloy, and is arranged between the base panel member 22 and the back panel member 26. The spring 38 is arranged on the back surface side of the back panel member 26, and biases the back panel member 26 against the base panel member 22 (that is, biases the projection 28 against the opening 24 so as to make the forward movement). The shape-memory member 40 does not change its shape (does not extend) at the predetermined temperature or lower. Therefore, when the environmental temperature is equal to or lower than the predetermined temperature, the projection 28 is fully inserted into the opening 24 so as to create the insertion state, and the air flow into the engine room 12 is interrupted. On the other hand, when the environmental temperature increases to be equal to or higher than the predetermined temperature, the shape-memory member 40 changes its shape (extends). Thereby, the projection 28 makes the backward movement from the insertion state against the biasing force of the spring 38, and the air can flow through the opening 24 into the engine room 12.

Further, it is not necessarily required to attach both of the spring 38 and the shape-memory member 40 to each of all the shaft members 34, and, as illustrated in Fig. 10, for example, the spring 38 may be attached to the shaft member 34 on one side (left side), and the shape-memory member 40 may be attached to the shaft member 34 on the opposite side (right side). Furthermore, with regard to the position to arrange the spring 38, the spring may be arranged between the base panel member 22 and the back panel member 26, and a contractile force of the spring may he used so as to allow the projection 28 to make the forward movement to be inserted into the opening 24. Notably, strength of the spring may be adjusted from the outside by manual operation and the like. Further, the connecting member, other than the connecting shaft, may be used to connect the back panel member 22 and the base panel member 26. Furthermore, as another modification example, the spring 38 and the shape-memory member 40 as biasing means may be disposed not around the shaft 34 but in the vicinity of the opening 24 and the projection 28.

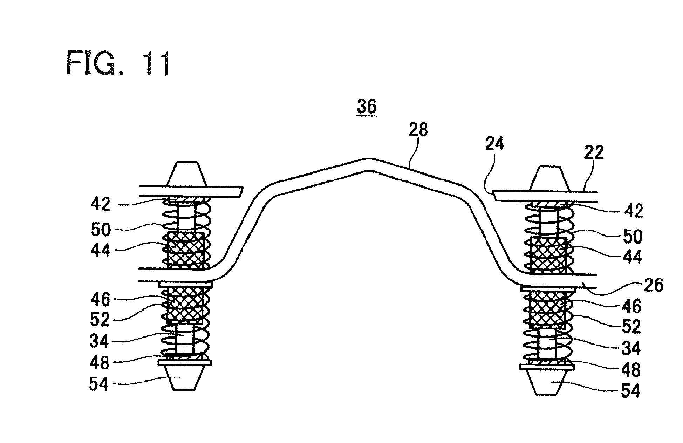

Moreover, the moving mechanism 36 as illustrated in Fig. 11 may be employed. With the moving mechanism 36 as illustrated in Fig. 11, the peripheral portion of the opening 24 of the base panel member 22 is also connected to the peripheral portion of the projection 28 of the back panel member 26 by the shaft members 34. A spring 52 and a shape-memory member 50 are attached to each of the shaft members 34. The shape-memory member 50 is formed by the shape-memory alloy, and is arranged between the base panel member 22 and the back panel member 26. The spring 52 is arranged on the back surface side of the back panel member 26, and biases the back panel member 26 against the base panel member 22. A plate member 42 is fixed to the back surface of the base panel member 22 (the surface on the back panel member 26 side). The plate member 42 is formed by magnetic material (steel material, for example). Magnets 44 and 46 are respectively fixed to the front surface (the surface on the base panel member 22 side) and to the back surface of the back panel member 26. The magnets 44 and 46 may be a neodymium magnet, for example. A plate member 48 is fixed to a rear end 54 of the shaft member 34. The plate member 48 is formed by the magnetic material (steel material, for example). The magnet 44 and the plate member 42 are arranged inside the shape-memory member 50 that is formed in a coil spring shape, and the magnet 44 and the plate member 42 face each other with a certain distance therebetween. The magnet 46 and the plate member 48 are arranged inside the spring 52, and the magnet 46 and the plate member 48 face each other with a certain distance therebetween. When the distance between the magnet 44 and the plate member 42 is reduced, the plate member 42 and the magnet 44 attract each other by a magnetic force and function as magnetic force attraction members, and when the distance between the magnet 46 and the plate member 48 is reduced, the plate member 48 and the magnet 46 attract each other by the magnetic force and function as the magnetic force attraction members.

With the moving mechanism 36 as illustrated in Fig. 11, the shape-memory member 50 does not extend when the environmental temperature is the predetermined temperature or lower, and therefore, the back panel member 26 abuts against the base panel member 22 by the biasing force of the spring 52. This creates the insertion state, in which the projection 28 is fully inserted in the opening 24, and the air flow into the engine room 12 is interrupted. At this time, as the plate member 42 is attracted by the magnet 44, the back panel member 26 and the base panel member 22 are held stably while abutting against each other. Namely, positional displacement of the back panel member 26 relative to the base panel member 22 can be prevented, even when an external force is applied to the back panel member 26. Therefore, the magnet 44 and the plate member 42 are an example of "first holding means" described in claims, but the first holding means may be formed by other components and the like.

Meanwhile, when the environmental temperature increases to be equal to or higher than the predetermined temperature, the shape-memory member 50 extends, and the projection 28 (back panel member 26) makes the backward movement against the biasing force of the spring 38. This creates the state in which the air can flow through the opening 24 into the engine room 12. Notably, when the back panel member 26 moves to the vicinity of the position where it abuts against the rear end 54 of the shaft member 34, the plate member 48 is attracted by the magnet 46. Thereby, displacement of the back panel member 26 relative to the base panel member 22 can be prevented, even when the external force is applied to the back panel member 26. Therefore, the magnet 46 and the plate member 48 are an example of "second holding means" described in claims, but the second holding means may be formed by other components and the like. Further, the first and the second holding means are formed by the magnetic force attraction members, but may be formed by other components.

It should be noted that, although the back panel member 26 is held relative to the base panel member 22 by the magnets 44 and 46 and the plate members 42 and 48 in the example illustrated in Fig. 11, such an aspect is not restrictive, and the magnets may be used instead of the plate members 42 and 48, for example. Even when the plate members 42 and 48 are replaced by the magnets, the similar effect can also be obtained. Moreover, the positions to arrange the shape-memory member 50, the spring 52, the magnets 44 and 46 and the plate members 42 and 48 can be adjusted freely, and are not limited to the example as illustrated in Fig. 11. For example, the magnets and the plate members may be arranged at the positions different from the positions where the shape-memory member 50 and the spring 52 are arranged.

Further, according to the above-described embodiment, the back panel member 26 is moved relative to the base panel member 22 that is secured to the vehicle 10, but the back panel member 26 of the vehicle 10 may be secured, and the base panel member 22 may be moved relative to the back panel member 26. Furthermore, the vehicle grille in this specification may be arranged at the position that is different from the position of the front grille of the vehicle 10 (the position on the rear side or the lateral side of the vehicle, for example).

Further, according to the above-described embodiment, each of the openings of the vehicle grille is opened and closed by changing the shape of the shape-memory member according to the environmental temperature, but the technique disclosed in this specification is not limited to such an aspect. For example, the shape-memory member may be electrically heated to control the temperature of the shape-memory member (that is, the shape of the shape-memory member), so as to open and close the opening of the vehicle grille. Specifically, the environmental temperature (the outside air temperature, the environmental temperature near the engine, the temperature of cooling water for a radiator, and the like (hereinafter simply referred to as the "environmental temperature")) is detected by detecting means such as a temperature sensor and, when the temperature detected by the temperature sensor is equal to or lower than the predetermined temperature, the shape-memory member is electrically heated to close the opening of the vehicle grille. When the environmental temperature is higher than the predetermined temperature, the electricity to the shape-memory member is stopped, so as to open the opening of the vehicle grille. With the structure like this, the opening can be opened and closed stably based on the detected temperature of the temperature sensor, since the shape of the shape-memory member is controlled by electrical heating. It should be noted that, when the structure of electrically heating the shape-memory member is employed, it is preferable to provide a lock mechanism for holding a closing state of the opening of the vehicle grille. As the position of the back panel member relative to the base panel member is held by the lock mechanism, it is possible to stop the electricity to the shape-memory member after the opening of the vehicle grille is closed (that is, after being locked by the lock mechanism). In opening the opening of the vehicle grille at this time, the lock mechanism may be released by electrically heating another shape-memory member, so as to open the opening of the vehicle grille by the biasing force of the spring.

Furthermore, according to the above-described embodiment, the shape-memory member and the spring are arranged in the vicinity of the base panel member and the back panel member, but the technique disclosed in this specification is not limited to such an aspect. For example, a mechanism to drive the back panel member (the shape-memory member and the spring, for example) may be arranged at the position separated from the base panel member and the back panel member, and the back panel member may be driven via another mechanism (a link mechanism or a cable mechanism, for example).

Notably, the technique disclosed in this specification may employ the technical means as follows.

(Technical means 1) A vehicle grille to be attached to a vehicle, the grille including:
a base panel member that is arranged on a front surface side of the vehicle, and is provided with an opening disposed to form a part of a design on a surface of the vehicle;
a back panel member that is arranged on a back surface side of the base panel member, and has a projection that is configured to be fittingly inserted into the opening; and
a moving mechanism that is configured to allow the back panel member to move relative to the base panel member, so that the projection is inserted into the opening, and the projection in an insertion state is separated from the opening,
wherein the moving mechanism includes a biasing member that biases the projection against the opening, and a shape-memory member that produces a force against a biasing force of the biasing member,
wherein the biasing member is disposed near the opening and the projection,
wherein the shape-memory member is disposed near the biasing member and is configured to change its shape according to a change in ambient temperature, and
wherein, in a state where the projection is inserted into the opening, the design on the surface of the vehicle is formed by combining the base panel member and the projection of the back panel member.

(Technical means 2) The vehicle grille according to the technical means 1,
wherein the moving mechanism further includes a connecting shaft member for connecting the back panel member and the base panel member at a portion where a peripheral portion of the opening of the base panel member overlaps a peripheral portion of the projection of the back panel member, and
wherein the biasing member and the shape-memory member are attached around the connecting shaft member.

(Technical means 3) An airflow interruption device that is attached to a surface of a vehicle, the airflow interruption device including:
a base panel member that is arranged on a front surface side of the vehicle and is provided with an opening;
a back panel member that is arranged on a back surface side of the base panel member, and has a projection that is configured to be inserted into the opening so as to be in close contact therewith (in a fitting manner); and
a moving mechanism that is configured to allow the back panel member to move relative to the base panel member, so that the projection is inserted into the opening, and the projection in the insertion state is separated from the opening,
wherein the moving mechanism includes
   a connecting shaft member that is fixed at a portion where a peripheral portion of the opening of the base panel member overlaps a peripheral portion of the projection of the back panel member, and that connects the back panel member and the base panel member, and
   a biasing member that is attached around the connecting shaft member and biases the projection against the opening.

(Technical means 4) The vehicle grille according to the technical means 1 or the airflow interruption device according to the technical means 3, further including:
at least one of first holding means for holding the back panel member at the first position and second holding means for holding the back panel member at the second position.

## Claims

1. A vehicle grille to be attached to a vehicle, the grille comprising:
a base panel member that is arranged on a front surface side of the vehicle, and is provided with an opening disposed to form a part of a design on a surface of the vehicle;
a back panel member that is arranged on a back surface side of the base panel member, and has a projection configured to be inserted into the opening so as to be in close contact with the opening;
a connecting member for connecting the back panel member and the base panel member; and
a moving mechanism that is configured to allow the back panel member to move relative to the base panel member, to a first position at which the projection is inserted into the opening, and to a second position at which the projection is separated from the opening,
wherein the moving mechanism comprises a biasing member that biases the back panel member, and a shape-memory member that produces a force against a biasing force of the biasing member by changing its shape according to ambient temperature,
the connecting member is provided at a portion where a peripheral portion of the opening of the base panel member overlaps a peripheral portion of the projection of the back panel member,
the biasing member and the shape-memory member are attached to the connecting member, and are configured to allow the back panel member to move from the first position to the second position, or to allow the back panel member to move from the second position to the first position, against the biasing force of the biasing member, by the shape-memory member changing its shape according to a change in the ambient temperature, and
in a state where the back panel member is moved to the first position relative to the base panel member, the design on the surface of the vehicle is integrally formed by combining the base panel member and the projection of the back panel member.

2. The vehicle grille according to claim 1, wherein the biasing force of the biasing member is set based on wind pressure applied to the base panel member or the back panel member when driving the vehicle.

3. The vehicle grille according to claim 1 or claim 2, wherein
the moving mechanism further comprises at least one of first holding means for holding the back panel member at the first position and second holding means for holding the back panel member at the second position.

4. An airflow interruption device that is attached to an opening in a surface of a vehicle, and allows switching between an airflow state and an airflow interruption state according to ambient temperature, the airflow interruption device comprising:
a base panel member that is provided with an opening;
a back panel member that is arranged on a back surface side of the base panel member, and has a projection configured to be inserted into the opening of the base panel member so as to be in close contact with the opening;
a connecting member for connecting the back panel member and the base panel member; and
a moving mechanism that is configured to allow the back panel member to move relative to the base panel member, to a first position at which the projection is inserted into the opening and to a second position at which the projection is separated from the opening,
wherein the moving mechanism comprises a biasing member that biases the back panel member, and a shape-memory member that produces a force against a biasing force of the biasing member by changing its shape according to the ambient temperature,
the connecting member is provided at a portion where a peripheral portion of the opening of the base panel member overlaps a peripheral portion of the projection of the back panel member, and
the biasing member and the shape-memory member are attached to the connecting member, and are configured to allow the back panel member to move from the first position to the second position, or to allow the back panel member to move from the second position to the first position, against the biasing force of the biasing member, by the shape-memory member changing its shape according to a change in the ambient temperature.

5. The airflow interruption device according to claim 4,
wherein the moving mechanism further comprises at least one of first holding means for holding the back panel member at the first position and second holding means for holding the back panel member at the second position.
